# EUROPÄISCHE PATENTSCHRIFT

(11) **EP 3 089 499 B1**
(45) Veröffentlichungstag und Bekanntmachung des Hinweises auf die Patenterteilung: **06.11.2019**
(21) Anmeldenummer: 16167217.5
(22) Anmeldetag: 27.04.2016
(51) Int. Cl.: H04W 12/06, H04L 29/06, H04W 12/04, H04W 84/12, H04W 12/00, H04W 4/00, H04W 12/08

(54) **NUTZERIDENTIFIKATION MIT INFRAROTSIGNALEN**
USER IDENTIFICATION WITH INFRARED SIGNALS
IDENTIFICATION D'UTILISATEUR COMPRENANT DES SIGNAUX INFRAROUGES

(30) Priorität: 30.04.2015 DE 102015106754
(43) Veröffentlichungstag der Anmeldung: 02.11.2016
(73) Patentinhaber: Deutsche Telekom AG, 53113 Bonn (DE)
(72) Erfinder: Wagner, Jens, 04288 Leipzig (DE); Ludwig, Theresa, 53129 Bonn (DE)
(74) Vertreter: Braun-Dullaeus Pannen Emmerling Patent- & Rechtsanwaltspartnerschaft mbB

(56) Entgegenhaltungen:
- EP-A1- 2 552 055
- DE-A1-102012 107 790
- DE-B3-102014 201 468
- US-A1- 2014 072 119

## Beschreibung

Die Erfindung betrifft ein Verfahren und ein System zur Vergabe einer Zugangsberechtigung zu einem Netzwerk, insbesondere zum Internet, an ein mobiles Endgerät eines Nutzers, der sich in einer definierten räumlichen Umgebung aufhält, wobei das mobile Endgerät über eine dedizierte Funkverbindung, insbesondere über eine WLAN Verbindung, mit einem Zugangspunkt des Netzwerks in datenleitender Verbindung steht und wobei die dedizierte Funkverbindung zwischen dem mobilen Endgerät und dem Zugangspunkt durch einen initialisierenden Datenaustausch zwischen dem mobilen Endgerät und einem in der räumlichen Umgebung befindlichen Infrarot-Transceiver authentifiziert wird.

Bekanntermaßen ist es in bestimmten Situationen notwendig, eine oder mehrere Personen innerhalb einer abgeschlossenen Räumlichkeit mit individuellen Zugangsrechten zu einem Netzwerk oder zu bestimmten über das Netzwerk abrufbaren Inhalten oder Diensten auszustatten. Solche Situationen ergeben sich beispielsweise in Restaurants, die Ihren Gästen kostenlosen Internetzugang anbieten, oder in Hotels, die zusätzlich zur Benutzung des WLANs auch noch den Zugriff auf spezielle Dienste, beispielsweise zur Begleichung der Rechnung, anbieten. Dabei muss sichergestellt werden, welcher Gast in welchem Zimmer den Dienst über den entsprechenden Zugang zum WLAN in Anspruch genommen hat. Ein anderes Beispiel sind Universitäten, die den Besuchern einer Konferenz oder einer Lehrveranstaltung Zugang zu bestimmten Diensten verschaffen möchten. Mitunter räumen auch Betriebe nur ihren Mitarbeitern Rechte an der von ihnen zur Verfügung gestellten Infrastruktur ein.

All diesen Situationen ist gemeinsam, dass Personen beim Betreten eines bestimmten Raumes und beim Verbleib in diesem Raum eine Zugangsberechtigung zu einem Datennetz, insbesondere dem Internet, und zu bestimmten über das Netz zugänglichen Diensten verschafft werden soll. Dabei ist zu berücksichtigen, dass die Räume eines Hauses in der Regel durch Zugangskontrollen mit hohen Standards gesichert sind.

Zur Vergabe solcher Zugangsrechte liegt die oftmals von Hotels genutzte einfachste Lösung im Verteilen der individuellen Kennung respektive einem Passwort auf Papier. In diesem Fall ist zwar einerseits der technische Aufwand gering, auf der anderen Seite ist diese Verfahrensweise für den Gast aber nicht sehr komfortabel, da er zur Erlangung eines Passwortes weite Wege und Wartezeiten aufwenden muss. Bei angebotenen Servicediensten kann der Umsatz leiden, weil keine spontanen Bestellungen möglich sind. Zudem lassen sich die Dienste nur unzureichend gegen unbefugten Zugang absichern.

Aus der US 2014/0072119 A1 ist ein Verfahren bekannt, bei dem eine dedizierte Funkverbindung eines mobilen Endgerätes mit einem Schlüssel verschlüsselt wird, der dem Endgerät über ein optisches Signal übermittelt wird.

Aus der DE 10 2014 201 468 B3 ist ein Smart-Home System mit der Möglichkeit zur örtlich begrenzten Steuerung von Raumparametern über ein persönliches mobiles Endgerät bekannt. Die EP 2 552 055 A1 Offenbart ein Verbindungsverfahren für ein solches Smart-Home System.

Aufgabe der Erfindung ist es nunmehr, ein mit einfachen Mitteln umzusetzendes Verfahren und System zur Vergabe einer Zugangsberechtigung an eine sich in einer definierten räumlichen Umgebung befindliche Person zu schaffen, so dass diese mit ihrem eigenen mobilen Endgerät, insbesondere mit ihrem Smartphone über eine dedizierte Funkverbindung Zugang zum Internet, und zu darüber abrufbaren Diensten hat.

Diese Aufgabe wird durch das Verfahren nach Anspruch 1 und das System nach Anspruch 6 gelöst. Bevorzugte Ausgestaltungen ergeben sich aus den jeweiligen Unteransprüchen.

Der Kern der Erfindung liegt anspruchsgemäß darin, dass der Person respektive dem Nutzer die Zugangsberechtigung über einen Datenaustausch mittels der bidirektionalen Infrarotverbindung erteilt wird und dass die Reichweite dieser Infrarotverbindung wegen der physikalischen Eigenschaft des Lichts, Wände nicht durchdringen zu können, auf genau den Raum begrenzt ist, in dem sich die Person befindet. Um die dedizierte Funkverbindung zwischen dem mobilen Endgerät der Person und dem Zugangspunkt zum Internet, beispielsweise einem WLAN-Router, durch einen initialisierenden Datenaustausch zu authentifizieren, geschieht dieser über die bidirektionalen Infrarotverbindung zwischen dem mobilen Endgerät und einem in der räumlichen Umgebung vorgesehenen Infrarot-Transceiver, wobei das mobile Endgerät die Authentifizierung über die Infrarotverbindung anfragt und nachfolgend vom Infrarot-Transceiver über dieselbe Infrarotverbindung Parameter zur Identifizierung und/oder geheime Schlüssel übermittelt bekommt.

Der erfindungsgemäße Einsatz der Infrarotverbindung hat erhebliche Vorteile, die sich daraus ergeben, dass Infrarotstrahlung im Gegensatz zu den bekannten Funkverbindungen Wände nicht durchdringen kann. So ergibt sich aus dieser auf Sicht eingeschränkten Reichweite der Infrarotstrahlung der große Vorteil, dass die Verbindung auf den Raum, in dem sich die Person gerade befindet, beschränkt ist. Insofern ist es möglich, vermittels einer solchen bidirektionalen Infrarotverbindung zu bestimmen, ob sich eine Person in einem Raum aufhält. Das ist möglich, weil sich das Endgerät der Person über die Infrarotverbindung bei dem in dem Raum befindlichen Infrarot-Transceiver meldet. Da Infrarotlicht keine Wände durchdringt, kann die Anwesenheit eines Nutzers in diesem speziellen Raum mit großer Sicherheit ermittelt werden.

Auf der anderen Seite ist die Reichweite einer Infrarotverbindung aber deutlich größer als die der sogenannten Nahfeldkommunikation, die nur wenige Zentimeter weit reicht und damit nicht zu einer Verbesserung der Servicequalität in den genannten Situationen beitragen kann. Mit der erfindungsgemäßen Vorgehensweise kann eine Person durch die Zuteilung eines Schlüssels, mithin die Initialisierung, einer Räumlichkeit zugeordnet werden, ohne dass es zu einer Beeinträchtigung im Komfort kommt.

Ein weiterer Kerngedanke liegt in dem Einsatz des persönlich zugeordneten mobilen Endgerätes, insbesondere des eigenen Mobiltelefons oder Smartphones, das über eine bidirektionale Infrarotschnittstelle verfügt. Die Reichweite der Sendeeinheiten von Smartphones liegt bei mehreren Metern, so dass sich die Infrarotschnittstellen erfindungsgemäß nutzen lassen, um die Anwesenheit eines Nutzers in der mit dem Infrarot-Transceiver ausgestatteten Räumlichkeit zu verifizieren. Die bidirektionale Infrarotschnittstelle moderner Mobiltelefone und Tablets ist ursprünglich dafür vorgesehen, um beispielsweise Signale einer vorhandenen Fernbedienung aufnehmen und wieder abspielen zu können. Sie kann jedoch zur Übertragung beliebiger Daten genutzt werden. Das erfindungsgemäße Verfahren stellt einen erheblichen Gewinn an Komfort und Sicherheit zu allen bisher bekannten Verfahren dar.

Zusätzlich kann über diese Schnittstelle ein Schlüsselaustausch für andere Dienste durchgeführt werden. Die Übertragungsart via Infrarot bietet wie Nahbereichsfunk eine physikalische Sicherheit gegen den Zugriff Dritter, hat aber eine höhere und vor allem genau auf den Raum begrenzte Reichweite. Zusammenfassend hat das Verfahren folgende grundlegende Eigenschaften: Zum einen die eindeutige Zuordnung von Nutzern zu einem Raum und zum anderen die gegenüber Zugriff durch Dritte sichere Übermittlung eines Schlüssels außerhalb des Raumes. Es ist vorteilhaft, häufig wechselnde, zufällige und lange Schlüssel zu verwenden.

Vorteilhafterweise ist das Verfahren so eingerichtet, dass eine Person zum Zugriff auf das Netz nur berechtigt ist, solange sie sich in der jeweiligen Räumlichkeit aufhält. Die Autorisierung der dedizierten Funkverbindung würde erlöschen, sobald das Smartphone insbesondere über einen längeren Zeitraum aus dem Sendebereich des Infrarot-Transceivers gelangt oder sobald ein vorgegebener Zeitpunkt überschritten ist.

In einer weiteren bevorzugten Ausführungsform sendet der Nutzer zum Zwecke der Autorisierung mit seinem Mobiltelefon eine entsprechende Anfrage über die Infrarotverbindung an den Infrarot-Transceiver um daraufhin vom Transceiver über dieselbe Infrarotverbindung einen geheimen Schlüssel zur Verschlüsselung der dedizierten Funkverbindung erhält, den der Transceiver von der Basisstation erhalten hat.

Vorteilhafterweise wird das Verfahren zur Vereinfachung der Installation von WLAN-Routern und zum Pairing mit Mobilgeräten eingesetzt.

Die grundlegenden Eigenschaften des Verfahrens sind die folgenden: Es besteht eine eindeutige Zuordnung von Nutzern zu einem Raum, unter bestimmten Voraussetzungen zu einer Position im Raum. Über die Infrarotverbindung kann eine raum- und ortsspezifische Kommunikationsadresse sowie ein geheimes temporäres Passwort übermittelt werden. Mit der Infrarotverbindung wird ein zweiter schneller Kommunikationskanal eröffnet. Zudem können die Funktionen in der Sprache des Nutzers auf seinem Gerät angezeigt werden.

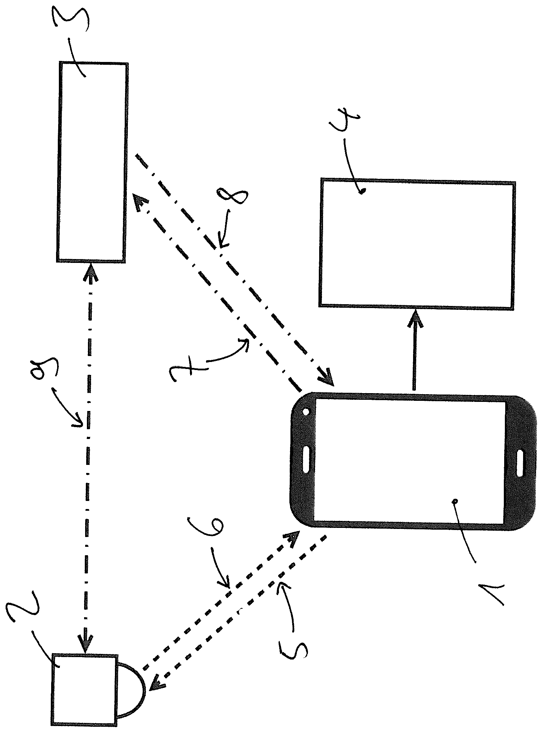

Die Erfindung wird nachfolgend anhand der Figur näher beschrieben:
Die Figur zeigt den grundsätzlichen Aufbau eines Systems zur Umsetzung des erfindungsgemäßen Verfahrens. Der Benutzer verfügt über ein mobiles Endgerät, z.B. in Form eines Smartphones 1, das ihm persönlich zugeordnet ist und das Mittel zum Aufbau einer dedizierten Funkverbindung, im vorliegenden Fall über WLAN, zu einem Zugangspunkt 3, hier einem WLAN-Router, aufweist. Das Smartphone 1 ist zudem mit einer nicht dargestellten Infrarotschnittstelle ausgestattet über die es in der Lage ist, Daten über eine Infrarotverbindung 5 zu senden und über eine Infrarotverbindung 6 zu empfangen. Auf dem Smartphone 1 ist ein Anwendungsprogramm ("App") 4 installiert, welches die Kommunikation über die verschiedenen Verbindungen und eine Authentifizierung und/oder einen Schlüsselaustausch bewerkstelligt. In dem abgeschlossenen Raum ist ein Infrarot-Transceiver 2 vorgesehen, der über eine bidirektionale Datenstrecke 9, die drahtgebunden oder drahtlos sein kann, mit dem WLAN-Router 3 kommuniziert. Auch das Smartphone 1 des Nutzers hat über die WLAN-Funkverbindungen 7 und 8 Zugriff auf den WLAN-Router 3.

Das Verfahren kann im einfachsten Fall jedem im Raum befindlichen Nutzer den Zugriff zum Internet ermöglichen. Dazu wird in regelmäßigen Abständen ein geheimer Schlüssel seitens des WLAN-Zugangspunktes generiert und über die abgesicherte Verbindung 9 an den oder die Infrarot-Transceiver 2 gesendet. Der Infrarot-Transceiver 2 "broadcastet" den Schlüssel in regelmäßigen Abständen über den Infrarotkanal 6, den jeder potentielle Nutzer im Raum über sein Smartphone empfangen kann. Da das Infrarotsignal 6 nicht in den Nachbarraum gelangen kann, ist die Übertragung allein schon durch die Wände "physikalisch" gegen missbräuchliche Nutzung außerhalb des Raumes geschützt.

Beim Betreten des Raumes startet der Nutzer die App 4 auf seinem Smartphone 1, die den Empfang des Schlüssels über die Infrarotstrecke 6 bewerkstelligt und sich mit dem empfangenen Schlüssel am Zugangspunkt über die WLAN-Verbindung 8 anmeldet. Nach einer gewissen Zeitspanne erklärt der Zugangspunkt den gerade benutzten Schlüssel für ungültig, wobei die Zeitspanne an das Nutzungsszenario angepasst werden kann. Für das kostenlose WLAN in einem Restaurant kann die Zeitspanne 15 Minuten betragen, während die Zugriffsberechtigung für die Benutzung in einem Hotelzimmer bis zur täglichen Check-Out-Zeit gehen kann, wobei der Nutzer nach Ablauf dieser Zeitspanne einen neuen Schlüssel empfangen muss. Das kann die App automatisch durchführen, so dass der Benutzer den zeitweiligen Verlust des Schlüssels nicht bemerkt.

Hält der Benutzer sein Smartphone insbesondere den Infrarotsender verdeckt, kann er von der App aufgefordert werden, es auszurichten, dass die Seite mit dem IR-Empfänger gegen die Zimmerdecke zeigt.

In einer anderen Ausführungsform werden seitens des WLAN-Routers 3 mehrere Schlüssel für verschiedene Räume generiert und jeweils einem Nutzer in einem bestimmten Raum zugeordnet. Beispielsweise könnten Fahrgäste der ersten Klasse eines Zuges auf diese Art eine höhere Übertragungsgeschwindigkeit zugeteilt bekommen.

In einer weiteren Ausführungsform des Verfahrens werden kostenpflichtige Dienste angeboten. Dazu werden die Nutzer für die kostenpflichtige Nutzung nicht nur vereinzelt, sondern erhalten den Schlüssel erst dann, wenn sie den anfallenden Kosten zugestimmt haben. Eine solche Vorgehensweise ist im Falle von Gästen in Hotelzimmern geeignet. Wer Zutritt zu dem Zimmer hat, ist automatisch im Abrechnungsmodell enthalten und könnte beispielsweise auch die Minibar nutzen.

In einem solchen Modell fragt der Nutzer mit der App über den IR-Transceiver 2 beim WLAN-Router 3 nach einem geheimen Schlüssel. Der WLAN-Router 3 kann in einem solchen Fall zweifelsfrei erkennen aus welchem Zimmer die Anfrage kommt, denn nur der IR-Transmitter in dem betreffenden Zimmer kann die Nachricht erhalten. Die Empfänger in den anderen Zimmern sind physikalisch am Empfang gehindert. Er generiert einen geheimen Schlüssel und verschickt ihn mittels des Transceivers des betreffenden Zimmers an die App des Nutzers. Diese Kommunikation ist physikalisch gesichert, da ein Dritter nicht vortäuschen kann, im Zimmer zu sein.

Der Nutzer benutzt nun den geheimen Schlüssel, um einen Kommunikation über WLAN 7 mit dem Zugangspunkt aufzubauen. Der Zugangspunkt kann so die Anfrage einem Zimmer zuordnen und teilt dem Gast die Kosten mit. Der Gast willigt in die Abrechnung über das Zimmer ein und damit kann die Verbindung dauerhaft aufgebaut werden.

Nach einer gewissen Zeit wird der Schlüssel ungültig. Der Gast wird dann gefragt, ob er den Service weiter kostenpflichtig nutzen möchte. In dem Fall wird über den Tranceiver ein neuer Schlüssel verschickt. Auf diese Weise ist eine automatische Identifikation möglich, ohne das der Gast Hotelpersonal bemühen muss und ohne dass es für den Gast nötig ist, den geheimen Schlüssel in das Mobiltelefon einzugeben. Das Hotel spart die Kosten für die manuelle Verteilung der Schlüssel. Der Gast hat sofortigen Zugriff auf den Service und erspart sich die unkomfortable Eingabe des Schlüssels.

Wird der Tranceiver im Zugangspunkt integriert kann die Schlüsselvergabe zum Pairing zwischen einem Router und einem mobilen Endgerät benutzt werden. In diesem Fall entsteht die Berechtigung aus dem physikalischen Zugriff auf den Router. Damit kann die Installation von WLAN-Routern vereinfacht werden und längere und zufällig generierte Schlüssel benutzt werden. Das Erraten des Schlüssels durch Dritte wird erschwert, während das Anmelden von mobilen Endgeräten vereinfacht wird. Schlüssel können länger sein und zufällig generiert werden. Außerdem ist es ohne Bequemlichkeitsverlust möglich, den Schlüssel oft zu ändern. Auch hier verhindert der Übertragungsweg physikalisch ein Abhören des Schlüssels.

## Patentansprüche

1. Verfahren zur Vergabe einer Zugangsberechtigung zum Internet an ein mobiles Endgerät (1) eines Nutzers, der sich in einer definierten räumlichen Umgebung aufhält, wobei das mobile Endgerät (1) über eine dedizierte WLAN Funkverbindung (7,8) mit einem Zugangspunkt (3) zum Internet in datenleitender Verbindung steht, wobei die dedizierte Funkverbindung (7,8) zwischen dem mobilen Endgerät (1) und dem Zugangspunkt (3) durch einen initialisierenden Datenaustausch zwischen dem mobilen Endgerät (1) und einem in der räumlichen Umgebung befindlichen Infrarot-Transceiver (2) authentifiziert wird,
wobei der initialisierende Datenaustausch über eine bidirektionale Infrarotverbindung (5,6) zum Infrarot-Transceiver (2) erfolgt, wobei der Nutzer zum Zwecke der Authentifizierung mit seinem mobilen Endgerät (1) eine entsprechende Anfrage über die bidirektionale Infrarotverbindung (5,6) an den Infrarot-Transceiver (2) sendet und daraufhin vom Infrarot-Transceiver (2) über dieselbe Infrarotverbindung (5,6) geheime Schlüssel erhält, die eine automatische Identifikation des Nutzers ermöglichen,
**dadurch gekennzeichnet,**
**dass** der Zugangspunkt (3) ein WLAN-Router ist, welcher mehrere geheime Schlüssel für verschiedene Räume generiert und jeweils einem Nutzer in einem bestimmten Raum zuordnet und dass Nutzern in verschiedenen Räumen unterschiedliche Übertragungsgeschwindigkeiten zugeteilt werden.

2. Verfahren nach Anspruch 1,
**dadurch gekennzeichnet,**
**dass** die Authentifizierung der dedizierten Funkverbindung (7,8) erlischt, sobald das mobile Endgerät (1) aus dem Sendebereich des Infrarot-Transceivers (2) gelangt oder sobald ein vorgegebener Zeitpunkt überschritten ist.

3. Verfahren nach Anspruch 1,
**dadurch gekennzeichnet,**
**dass** die Parameter zur Identifizierung und/oder die geheimen Schlüssel seitens des Zugangspunktes (3) von einem im Netzwerk befindlichen zentralen Server generiert werden.

4. Verfahren nach einem der vorherigen Ansprüche,
**dadurch gekennzeichnet,**
**dass** die Anwesenheit des Nutzers in einem Raum über das Bestehen der Infrarotverbindung (5,6) ermittelt wird.

5. Verfahren nach einem der vorherigen Ansprüche,
**dadurch gekennzeichnet,**
**dass** über die dedizierte Funkverbindung (7,8) Dienste im Netz abgerufen werden, wobei der Nutzer durch die Authentifizierung identifiziert wird.

6. System zur Umsetzung des Verfahrens nach einem der vorherigen Ansprüche, wobei mobile Endgeräte (1) vorgesehen sind, die Mittel zum Aufbau einer dedizierten WLAN Funkverbindung (7,8) zu einem Zugangspunkt (3) des Systems aufweisen, wobei Infrarot-Transceiver (2) in abgeschlossenen Räumlichkeiten vorgesehen sind, wobei die mobilen Endgeräte (1) Infrarotschnittstellen zum Aufbau von bidirektionalen Infrarotverbindungen (5,6) aufweisen, die zum initialisierenden Datenaustausch zwischen dem mobilen Endgerät (1) und dem in der Räumlichkeit befindlichen Infrarot-Transceiver (2) vorgesehen sind, wobei der initialisierende Datenaustausch über die bidirektionale Infrarotverbindung (5,6) der Authentifizierung des Nutzers dient und das mobiles Endgerät (1) dazu eingerichtet ist eine Anfrage an den Infrarot-Transceiver (2) zu senden und der Infrarot-Transceiver (2) dazu eingerichtet ist über dieselbe Infrarotverbindung (5,6) geheime Schlüssel zu erhalten, die eine automatische Identifikation des Nutzers ermöglichen,
**dadurch gekennzeichnet,**
**dass** der Zugangspunkt (3) ein WLAN-Router ist, welcher dazu eingerichtet ist, dass mehrere geheime Schlüssel für verschiedene Räume generiert und jeweils einem Nutzer in einem bestimmten Raum zuordnet werden und dass Nutzern in verschiedenen Räumen unterschiedliche Übertragungsgeschwindigkeiten zugeteilt werden.

## Claims

1. A method for issuing an access right to the internet on a mobile terminal device (1) of a user who is in a defined spatial environment, wherein the mobile terminal device (1) is in data transmission communication, via a dedicated WLAN radio connection (7, 8), with an access point (3) to the internet, wherein the dedicated radio connection (7, 8) between the mobile terminal device (1) and the access point (3) is authenticated by an initializing data exchange between the mobile terminal device (1) and an infrared transceiver (2) located in the spatial environment,
wherein the initializing data exchange occurs via a bidirectional infrared connection (5, 6) to the infrared transceiver (2), wherein for authentication purposes, the user transmits a corresponding request via the bidirectional infrared connection (5, 6) to the infrared transceiver (2) with his mobile terminal device (1) and then receives secret keys from the infrared transceiver (2) via the same infrared connection (5, 6), which keys enable an automatic identification of the user,
**characterized in that**
the access point (3) is a WLAN router, which generates a plurality of secret keys for different areas and assigns them to one user in a specific area in each case, and that different transmission speeds are allocated to users in different areas.

2. The method according to Claim 1,
**characterized in that**
the authentication of the dedicated radio connection (7, 8) expires as soon as the mobile terminal device (1) is outside the transmission range of the infrared transceiver (2) or as soon as a specified limit is exceeded.

3. The method according to Claim 1,
**characterized in that**
the parameters for identification and/or the secret keys are generated on the part of the access point (3) by a central server located in the network.

4. The method according to any one of the preceding claims,
**characterized in that**
the presence of a user in an area is established via the existence of the infrared connection (5, 6).

5. The method according to any one of the preceding claims,
**characterized in that**
services in the network can be requested via the dedicated radio connection (7, 8), wherein the user is identified by the authentication.

6. A system for implementing the method according to any one of the preceding claims, wherein provision is made of mobile terminal devices (1), which have means for establishing a dedicated WLAN radio connection (7, 8) to an access point (3) of the system,
wherein provision is made of infrared transceivers (2) in separate locations, wherein the mobile terminal devices (1) have infrared interfaces for establishing bidirectional infrared connections (5, 6), which are provided for the initializing data exchange between the mobile terminal device (1) and the infrared transceiver (2) situated in the location, wherein the initializing data exchange via the bidirectional infrared connection (5, 6) is used for the authentication of the user and the mobile terminal device (1) is set up to transmit a request to the infrared transceiver (2) and the infrared transceiver (2) is set up to receive secret keys via the same infrared connection (5, 6), which keys enable an automatic identification of the user,
**characterized in that**
the access point (3) is a WLAN router, which is set up such that a plurality of secret keys are generated for different areas and assigned to one user in a specific area in each case, and that different transmission speeds are allocated to users in different areas.

## Revendications

1. Procédé pour l'octroi d'un droit d'accès à Internet à un terminal mobile (1) d'un utilisateur, lequel réside dans un environnement spatial défini, dans lequel le terminal mobile (1) est en liaison de communication de données via une liaison radio WLAN dédiée (7, 8) avec un point d'accès (3) à Internet, dans lequel la liaison radio dédiée (7, 8) entre le terminal mobile (1) et le point d'accès (3) est authentifiée par un échange de données initialisant entre le terminal mobile (1) et un émetteur/récepteur infrarouge (2) se trouvant dans l'environnement spatial,
dans lequel l'échange de données initialisant s'effectue via une liaison infrarouge bidirectionnelle (5, 6) avec l'émetteur/récepteur infrarouge (2), dans lequel, pour les besoins de l'authentification, l'utilisateur envoie une requête correspondante avec son terminal mobile (1), via la liaison infrarouge bidirectionnelle (5, 6), à l'émetteur/récepteur infrarouge (2) et obtient suite à cela de la part de l'émetteur/récepteur infrarouge (2), via la même liaison infrarouge (5, 6), des clés secrètes qui permettent une identification automatique de l'utilisateur,
**caractérisé en ce que**
le point d'accès (3) est un routeur WLAN, lequel génère plusieurs clés secrètes pour différents espaces et les attribue respectivement à un utilisateur dans un espace défini et que des vitesses de transmission différentes sont allouées à des utilisateurs dans différents espaces.

2. Procédé selon la revendication 1,
**caractérisé en ce que**
l'authentification de la liaison radio dédiée (7, 8) prend fin dès que le terminal mobile (1) quitte la zone d'émission de l'émetteur/récepteur infrarouge (2) ou dès qu'un instant dans le temps prescrit est dépassé.

3. Procédé selon la revendication 1,
**caractérisé en ce que**
les paramètres pour l'identification et/ou les clés secrètes sont générés du côté du point d'accès (3) par un serveur central se trouvant dans le réseau.

4. Procédé selon l'une des revendications précédentes,
**caractérisé en ce que**
l'on détermine la présence de l'utilisateur dans un espace via l'existence de la liaison infrarouge (5, 6) .

5. Procédé selon l'une des revendications précédentes,
**caractérisé en ce que**
l'on accède à des services du réseau via la liaison radio dédiée (7, 8), dans lequel l'utilisateur est identifié par l'authentification.

6. Système pour la mise en œuvre du procédé selon l'une des revendications précédentes, dans lequel des terminaux mobiles (1) sont prévus, lesquels présentent des moyens pour l'établissement d'une liaison radio WLAN dédiée (7, 8) avec un point d'accès (3) du système,
dans lequel des émetteurs/récepteurs infrarouge (2) sont prévus dans des locaux fermés, dans lequel les terminaux mobiles (1) présentent des interfaces infrarouge pour l'établissement de liaisons infrarouge bidirectionnelles (5, 6) qui sont prévues pour l'échange de données initialisant entre le terminal mobile (1) et l'émetteur/récepteur infrarouge (2) se trouvant dans le local, dans lequel l'échange de données initialisant via la liaison infrarouge bidirectionnelle (5, 6) sert à l'authentification de l'utilisateur et le terminal mobile (1) est étudié pour envoyer une requête à l'émetteur/récepteur infrarouge (2) et l'émetteur/récepteur infrarouge (2) est étudié pour obtenir, via la même liaison infrarouge (5, 6), des clés secrètes qui permettent une identification automatique de l'utilisateur,
**caractérisé en ce que**
le point d'accès (3) est un routeur WLAN, lequel est étudié pour que plusieurs clés secrètes pour différents espaces soient générées et soient attribuées respectivement à un utilisateur dans un espace défini, et que différentes vitesses de transmission sont allouées à des utilisateurs dans des espaces différents.
